(19) Europäisches Patentamt
European Patent Office
Office européen des brevets

(11) **EP 1 391 684 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(51) Int Cl.⁷: **G01B 5/00**, G01B 7/34, G01B 21/04

(21) Anmeldenummer: **03016839.7**

(22) Anmeldetag: **23.07.2003**

(54) **Koordinatenmessmaschine und Fehlerkorrekturverfahren**

Coordinate measuring machine and method for correcting error

Machine de mesure de coordonnées et méthode de correction d'erreur

(84) Benannte Vertragsstaaten:
**DE FR GB IT**

(30) Priorität: **16.08.2002 DE 10237501**

(43) Veröffentlichungstag der Anmeldung:
**25.02.2004 Patentblatt 2004/09**

(73) Patentinhaber: **Carl Zeiss Industrielle Messtechnik GmbH**
**73447 Oberkochen (DE)**

(72) Erfinder: **Held, Tobias**
**86720 Nördlingen (DE)**

(74) Vertreter: **Breit, Ulrich et al**
**Geyer, Fehners & Partner Patentanwälte**
**Perhamerstrasse 31**
**80687 München (DE)**

(56) Entgegenhaltungen:
EP-A- 0 596 494          EP-A- 1 158 269
DE-A- 3 103 146          DE-A- 10 006 753
DE-A- 19 518 268         DE-A- 19 830 646
DE-C- 3 410 919          US-A- 4 788 440
US-A- 5 483 820

• PATENT ABSTRACTS OF JAPAN Bd. 1999, Nr. 10, 31. August 1999 (1999-08-31) & JP 11 134012 A (FANUC LTD), 21. Mai 1999 (1999-05-21)
• PATENT ABSTRACTS OF JAPAN Bd. 0071, Nr. 34 (P-203), 11. Juni 1983 (1983-06-11) & JP 58 050009 A (MITSUBISHI DENKI KK), 24. März 1983 (1983-03-24)

EP 1 391 684 B1

**Beschreibung**

Die Erfindung bezieht sich auf eine Koordinatenmeßmaschine mit einem Taster zum Abfühlen einer Oberfläche, der am einen Ende einer Pinole angebracht ist, und einer Steuervorrichtung, die die Position des Tasters bestimmt und daraus Meßwerte erzeugt, wobei die Steuervorrichtung die Meßwerte mittels in Tabellen vorab bereitgestellten Korrekturwerten korrigiert und dazu die beim aktuellen Betriebszustand vorliegende Steifigkeit der Pinole mittels hinterlegten, betriebszustandsabhängigen Daten ermittelt, damit einen Fehlerwert für eine aktuelle Durchbiegung oder Verkippung der Pinole bestimmt und mit diesem Fehlerwert die Meßwerte korrigiert. Die Erfindung bezieht sich weiter auf ein Korrekturverfahren für die Messung mit einer Koordinatenmeßmaschine, die mit einem Taster eine Oberfläche abfühlt, wobei der Taster an einem Ende einer Pinole angebracht ist, Meßwerte über die Position des Tasters aufgenommen werden, die Meßwerte mittels in Tabellen vorab bereitgestellten Korrekturwerten korrigiert werden, die beim aktuellen Betriebszustand vorliegende Steifigkeit der Pinole mittels hinterlegten, betriebszustandsabhängigen Daten ermittelt, mittels dieser Steifigkeit ein Fehlerwert für eine aktuelle Durchbiegung oder Verkippung der Pinole bestimmt wird und mit diesem Fehlerwert die Meßwerte korrigiert werden.

Zur Erhöhung der Meßgenauigkeit werden bei Koordinatenmeßmaschinen seit einiger Zeit die Meßergebnisse, d.h. die Koordinatenmeßwerte, die für die Tasterposition beim Abfühlen einer Oberfläche erhalten werden, mit rechnerischen Korrekturen hinsichtlich ihrer Genauigkeit verbessert, wobei unter Abfühlen hier jede Art der Vermessung verstanden wird, also sowohl kontaktierend als auch kontaktlos. Beispielsweise können statische Abweichungen der Führungen des Tasters der Koordinatenmeßmaschine von einem geradlinigen und rechtwinkligen Koordinatenmeßsystem berücksichtigt werden. Aber auch das elastische Verhalten der Koordinatenmeßmaschine wird zur Korrektur herangezogen, wie dies die gattungsbildende DE 195 18 268 A1 zeigt, die vorschlägt, die elastische Verformung der Mechanik der Koordinatenmeßmaschine durch das Eigengewicht an mehreren Meßpunkten des Meßbereiches der Koordinatenmeßmaschine zu bestimmen, Korrekturwerte zu berechnen und zur Korrektur der Meßwerte heranzuziehen.

Aus der EP-A-0596494 ist ein Mikroskop zur Abtastung einer Oberfläche bekannt, das atomare Kräfte zwischen der Oberfläche und einer an einem auslenkbaren Arm gehaltenen Spitze zur Abbildung nutzt. Die EP-A-1158269 beschreibt ein Korrekturverfahren zur Berücksichtigung des dynamischen Biegeverhaltens bei Koordinatenmeßmaschinen.

Der Erfindung liegt die Aufgabe zugrunde, eine Koordinatenmeßmaschine sowie ein Korrekturverfahren für die Messung mit einer Koordinatenmeßmaschine der gattungsgemäßen Art so weiterzubilden, daß die Meßgenauigkeit gesteigert wird.

Diese Aufgabe wird bei einem Korrekturverfahren der eingangs genannten Art dadurch gelöst, daß, wenn der Taster am Ende der Pinole über ein Dreh-Schwenk-Gelenk schwenkbar angebracht ist, die Stellung des Dreh-Schwenk-Gelenks ermittelt, mittels einer weiteren Tabelle ein bei der aktuellen Stellung des Dreh-Schwenk-Gelenkes und der aktuellen Tasterkonfiguration auf die Pinole ausgeübtes Moment bestimmt und bei der Bestimmung des Fehlerwertes berücksichtigt wird. Bei einer Koordinatenmeßmaschine der eingangs genannten Art wird die Aufgabe dadurch gelöst, daß, wenn der Taster über ein Dreh-Schwenk-Gelenk schwenkbar am Ende der Pinole angebracht ist, die Steuervorrichtung die Stellung des Dreh-Schwenk-Gelenkes ermittelt, mittels einer weiteren Tabelle ein bei der aktuellen Stellung des Dreh-Schwenk-Gelenkes und der aktuellen Tasterkonfiguration auf die Pinole ausgeübtes Moment bestimmt und bei der Bestimmung des Fehlerwertes berücksichtigt.

Der erfindungsgemäße Ansatz berücksichtigt also zusätzlich zu Verformungen der Mechanik der Meßmaschine, die durch deren Eigengewicht bedingt sind, nun auch die Auswirkungen des Tasters auf die Koordinatenmeßmaschine, indem das vom Taster auf die Pinole ausgeübte Moment, das zu einer Verformung der Pinole führt, berücksichtigt wird. Diesbezüglich sei darauf hingewiesen, daß der Begriff Taster hier sowohl einen Taststift als auch einen den Taststift tragenden Tastkopf ebenso umfaßt, wie kontaktlos, z. B. optisch, eine Oberfläche abfühlende Sensoren. Unter Moment wird dabei jede zu einer Verformung der Pinole führende Krafteinwirkung durch den Taster verstanden, beispielsweise ein Moment um die Längsachse, das die Pinole in eine Torsion beaufschlagt, oder ein Biegemoment, das der Pinole eine Biegung aufprägt.

Durch den erfindungsgemäßen Ansatz kann nun unabhängig von der Ausbildung des Tasters eine genaue Messung erreicht werden. Dies ist insbesondere vor dem Hintergrund, daß Koordinatenmeßmaschinen vermehrt mit unterschiedlichen Tastern betrieben werden können, die sich hinsichtlich Massenträgheitsmoment und Gewicht deutlich unterscheiden können, vorteilhaft. Insbesondere mit langen und/oder schweren Tastern ergeben sich ansonsten bei großen Auskragungen der Pinole ansonsten merkliche Meßfehler. Indem nun das vom Taster auf die Pinole ausgeübte Moment ermittelt und berücksichtigt wird, werden diese Meßfehler vermieden. So sind z. B. optische Sensoren im Einsatz, wie z. B. das System Eagle Eye Navigator der Carl Zeiss, Oberkochen, bei denen ansonsten durch das hohe Gewicht des Sensors Meßfehler über 0,2 μm entstünden.

Mit der bekannten Steifigkeit der Pinole, die üblicherweise vom Betriebszustand des Koordinatenmeßgerätes, d.h. von Lage und Auskragung der Pinole, abhängt, kann eine entsprechende Transformationsmatrix sowie ein Transformationsvektor berechnet werden, mit dem solche Meßfehler korrigiert werden. Es ist dadurch nicht mehr erforderlich, die Steifigkeit der Pinole auf maximale Werte zu bringen, da auch mit kostengünstigeren, weniger steifen Pinolen mit Hilfe der erfindungsgemäßen Korrektur dennoch exakte Meßwerte erzielt werden.

Wesentlich für die Fehlerkorrektur ist, daß Fehler, die tasterabhängig sind, mithin bei der üblichen Korrektur, die von Standardtastern ausgeht, nicht Berücksichtigung finden, nunmehr durch den Fehlerwert erfaßt und dann korrigiert werden. Es wird deshalb das auf die Pinole ausgeübte Moment, das zu einer Verformung der Pinole, beispielsweise eine Torsion oder Biegung, bzw. eine entsprechende Verschiebung in Pinolenlagern, die zu einer Drehung oder Parallelversetzung der Pinole führen können, korrigiert. Ein wesentlicher Tasterparameter ist beispielsweise das Gewicht eines Tasters. Es ist deshalb bevorzugt, das Gewicht des Tasters bei der Bestimmung des Fehlerwertes zu berücksichtigen.

Das erfindungsgemäße Verfahren bzw. die erfindungsgemäße Meßmaschine berücksichtigen, wenn sich die Auswirkung eines Tasters, der am Ende der Pinole über ein Dreh-Schwenk-Gelenk schwenkbar befestigt ist, auf die Verformung der Pinole während des Betriebes ändert. Dann hat die Stellung dieses Gelenkes, die im Betrieb üblicherweise variiert wird, Auswirkung auf das Moment um eine Pinolenlängsachse. Zusammen mit dem Gewicht des Tasters kann dann als Fehlerwert für jeden aktuellen Betriebszustand eine Transformationsmatrix und ein Transformationsvektor berechnet werden, die dann zusammen mit den üblichen Korrekturwerten eine Korrektur der Meßwerte ermöglichen. Da der Taster am Ende der Pinole über ein Dreh-Schwenk-Gelenk schwenkbar angebracht ist, ist es erfindungsgemäß vorgesehen, die Stellung des Dreh-Schwenk-Gelenkes zu ermitteln und bei der Bestimmung des Fehlerwertes zu berücksichtigen.

Eine ähnliche Problematik mit Tastern, die während des Betriebes unterschiedliche Auswirkungen auf die Pinole haben können, sind stark seitlich auskragende Taster, bei denen üblicherweise zur Ausbalancierung ein Gegengewicht verwendet wird. Da jedoch normalerweise die Gesamtmasse des Tasters begrenzt ist, ist hierbei je nach Auskragung des Tasters, die durch eine Taststift-Verlängerung vergrößert werden kann, nur eine unzureichende Kompensierung des Momentes des auskragenden Tasters möglich. Durch die erfindungsgemäße Korrektur kann bei verschiedensten Verlängerungen des Taststiftes dennoch ein optimales Ergebnis erreicht werden.

Bei solchen seitlich auskragenden Tastern ist es folglich bevorzugt, daß vom Taster verursachtes ein Moment um die Pinolenachse ermittelt und bei der Bestimmung des Fehlerwertes berücksichtigt wird.

Die Steifigkeit der Pinole ist ein wesentlicher Parameter für die Verformung, die durch das vom Taster auf die Pinole ausgeübte Moment entsteht. Eine möglichst genaue Bestimmung der aktuellen, d.h. zu einem momentanen Betriebspunkt vorliegenden Steifigkeit, ist deshalb einer exakten Korrektur förderlich. Es ist deshalb vorgesehen, betriebsparameterabhängige Werte für die Steifigkeit zu hinterlegen, um bei der Korrektur dem momentanen Steifigkeitswert möglichst nahe zu kommen. Dabei ist es insbesondere zweckmäßig, die Steifigkeitsparameter getrennt nach Torsionssteifigkeit und Biegesteifigkeit in einer Datei für gemessene Stützstellen der Pinolenauskragung abzulegen. Dann kann beim erfindungsgemäßen Verfahren bzw. in der erfindungsgemäßen Vorrichtung bei der Ermittlung der Steifigkeit auf eine Tabelle mit Steifigkeitsparametern zugegriffen werden. Diese Tabelle kann beispielsweise in einer Speichereinheit angelegt sein.

Die Tabelle kann mit Werten belegt sein, die aus der Konstruktion der Koordinatenmeßmaschine, insbesondere den Aufbau der Pinole und deren Lager, berechnet wurden. Genauer ist es dagegen, die Biege- und Torsionssteifigkeit der Pinole zu vermessen, und damit Meßwerte für die Tabelle zu generieren. Beispielsweise kann das auskragende Ende einer Pinole mit einem Gewicht belastet und mit der Koordinatenmeßmaschine durch Abtastung eines Prüfkörpers die Durchbiegung erfaßt werden. Ebenso ist es möglich, die Biegesteifigkeit mit einer Winkelmeßvorrichtung, die eine mit einem Biegemoment belastete Pinole abfühlt, zu messen.

Um erfindungsgemäß das vom Taster auf die Pinole ausgeübte Moment bei der Bestimmung des Fehlerwertes zu berücksichtigen, müssen Tasterdaten geeignet ausgewertet werden. Dabei kann es sich insbesondere um einen zu einer Torsion führenden Moment- oder zu einer Biegung der Pinole führenden Gewichtsparameter handeln. Gleiches gilt für Daten von aktiven Tasterkomponenten, wie einem Dreh-Schwenk-Gelenk oder schaltenden Tastern.

Die Erfindung wird nachfolgend unter Bezugnahme auf die Zeichnung beispielshalber noch näher erläutert. In den Zeichnungen zeigen:

Fig. 1    eine schematische Darstellung einer Horizontalarm-Meßmaschine mit einer auskragenden Pinole, an deren Ende mit einem Dreh-Schwenk-Gelenk ein Taster befestigt ist,

Fig. 2    einen Ausschnitt einer Portal-Meßmaschine mit einem seitlich auskragenden Taster,

Fig. 3    eine schematische Darstellung einer Torsion, die an einer Koordinatenmeßmaschine von einem seitlich auskragenden Taster hervorgerufen wird,

Fig. 4    eine schematische Darstellung einer Vorrichtung zur Messung der Torsionssteifigkeit einer Pinole und

Fig. 5    ein Blockschaltbild eines Verfahrens zur Korrektur von Meßfehlern, die durch die Verformung einer Pinole einer Meßmaschine auftreten können.

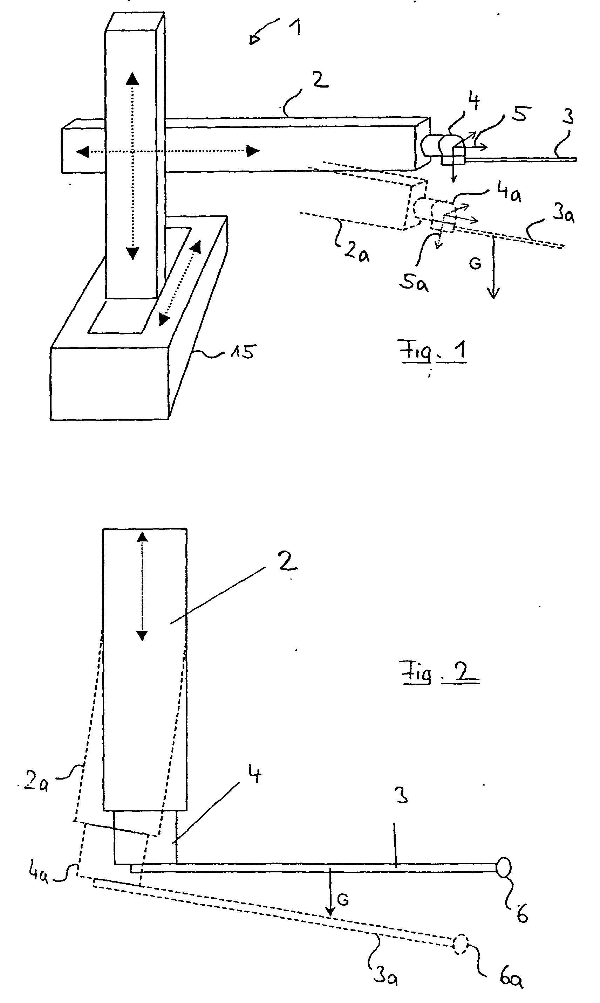

Bevor nun im Detail auf die Korrektur von Meßabweichungen bei einer Koordinatenmeßmaschine eingegangen wird, sollen zuvor die Unterschiede zwischen elastischen Abweichungen und Führungsfehlern, die bereits bekanntermaßen auch bei beliebig "starren Meßmaschinen" auftreten, erläutert werden. Führungsfehler sind eine Funktion der Position eines Tastkopfes bzw. eines betreffenden Meßschlittens auf einer entsprechenden Bewegungsachse. Sie rühren von einer Winkeligkeit des Führungssystems her, die von der idealen Rechtwinkligkeit abweicht. Weitere Führungsfehler entstehen dadurch, daß die dreiachsige Verschiebung des Tastkopfes nicht exakt mathematischen Geraden folgt, sondern aufgrund mechanischer Gegebenheiten auf gekrümmten Bahnen verläuft. Elastisch bedingte Meßabweichungen von Koordinatenmeßmaschinen sind dagegen die Folge von Deformationen unter dem Eigengewicht bzw. der Eigenmasse der Führungsglieder einer kinematischen Kette, wobei diese Deformation nicht mehr allein eine Funktion der Position in der betreffenden Bewegungsrichtung selbst sind, sondern von weiteren Variablen abweicht. So wirkt sich beispielsweise die Antastkraft, mit der ein Taster auf einer zu vermessenden Oberfläche verfährt und die Beschleunigung der Maschinenbewegung. Diese Problematik stellt sich bei Koordinatenmeßmaschinen ganz allgemein, also nicht nur bei der in Fig. 1 dargestellten Bauweise mit horizontalem Meßarm, sondern auch bei der in Fig. 2 im Ausschnitt dargestellten Variante mit nach unten ragendem Meßarm, die als Portal-Meßmaschine bezeichnet wird. Diesbezügliche Fehler werden durch Korrekturtabellen behoben, die für jeden Meßpunkt eine von den erwähnten Parametern abhängende Meßabweichung zur Meßwertkorrektur bereitstellen. Dabei gehen diese Tabellen von Standard-Tasterkonfigurationen aus, die ein Normgewicht aufweisen, dessen Schwerpunkt auf der Pinolenachse liegt.

Als weitere Einflußgröße für eine Abweichung der Ist-Tasterposition von der geometrisch zu erwartenden, erfolgt durch eine Verformung der Pinole, die weder durch Führungsfehler noch durch Taster verursacht wird, die von der Standkonfiguration abweichen. Dies ist in Fig. 1 schematisch dargestellt, die eine Koordinatenmeßmaschine 1 zeigt, die eine als Horizontalarm auskragende Pinole 2 aufweist. Am freien Ende der Pinole 2 befindet sich ein Taster 3, der über ein Dreh-Schwenk-Gelenk 4 an der Pinole 2 befestigt ist. Dieses Dreh-Schwenk-Gelenk 4 ermöglicht es, den Taster 3 gegenüber dem Ende der Pinole 2 zu verstellen, so daß mit der Spitze des Tasters 3 eine annähernd halbkugelförmige Fläche erreicht werden kann.

Der Taster 3 kann durch die Koordinatenmeßmaschine 1 dreiachsig verstellt werden; dies ist in Fig. 1 durch gestrichelte Doppelpfeile symbolisiert. Diese Verstellung verläuft entlang dreier, idealerweise senkrecht zueinander stehender Achsen, die die Achsen des Koordinatensystems sind, in dem durch Abtasten einer Oberfläche mit der Spitze des Tasters 3 Meßwerte erzeugt werden. Ein in der Koordinatenmeßmaschine 1 vorgesehenes Steuergerät 15 erfaßt dabei fortlaufend eine Tasterkoordinate 5, die einen Vektor im Koordinatensystem darstellt, das in Fig. 1 symbolisiert ist. Es handelt sich dabei um den Vektor vom Ursprung des Koordinatensystems zur Spitze des Tasters 3. Fährt nun diese Spitze eine zu vermessende Oberfläche ab, so stellen die Taster-Koordinaten, die vom Steuergerät 15 registriert werden, die Koordinaten der abzufühlenden Oberfläche dar.

Durch die am auskragenden Ende der Pinole 2 angreifende Gewichtskraft, nämlich das Gewicht des Dreh-Schwenk-Gelenkes 4 und des Tasters 3, verformt sich die Pinole. Dies ist schematisch in Fig. 1 durch Bezugszeichen 2a bezeichnet. Das Dreh-Schwenk-Gelenk und der Taster nehmen dabei die in Fig. 1 mit 4a bzw. 3a bezeichneten Lagen ein. Dies wirkt sich natürlich auch auf die Tasterkoordinate aus, die nunmehr, wie in Fig. 1 mit Bezugszeichen 5a bezeichnet, liegt. Die Gewichtskraft, die zu dieser Verformung führt, ist in Fig. 1 mit einem Pfeil G eingetragen, sie weicht von der Gewichtskraft der Standardkonfiguration sowohl hinsichtlich Größe als auch Angriffspunkt (Massenschwerpunkt von Taster 3 und Gelenk 4) ab.

Diese Gewichtskraft verformt die Pinole 2, so daß sich sowohl ein translatorischer Versatz als auch eine Verkippung des Pinolenendes und eine Drehung der Tasterkoordinate ergibt. Der translatorische Versatz kann, so er einmal ermittelt ist, in Form eines Korrekturvektors direkt zur Tasterkoordinate addiert werden. Er macht den größten Fehleranteil aus. Es ist deshalb für eine Fehlergrobkorrektur ausreichend, den Anteil in Lotrichtung dieses translatorischen Versatzes zu ermitteln und zur Tasterkoordinate geeignet zu addieren. Die Verkippung des Pinolenendes und die Drehung können mit einer Translationsmatrix beschrieben werden, die zur Korrektur mit der Tasterkoordinate multipliziert wird.

Da die Koordinatenmeßmaschine 1 bei der Montage auf die Tastermasse und -massenverteilung der Standard-Konfiguration eingestellt wurde, ist für die Korrektur die Differenz von Gewicht und Massenschwerpunkt der Kombination aus Taster 3 und Gelenk 4 zu den Standardwerten maßgebend, um das Moment zu ermitteln, das der Taster 3 mit dem Dreh-Schwenk-Gelenk 4 auf die Pinole 2 ausübt und das die Änderung der Tasterkoordinaten 5 in die Tasterkoordinaten 5a bewirkt.

Eine ähnliche Auswirkung der Gewichtskraft G ist in Fig. 2 dargestellt, die eine Pinole 2 einer Portal-Meßmaschine zeigt. Hier ist ein Taster 3 mit einer Verlängerung gezeigt, an deren Spitze eine Tastkugel 6 sitzt. Mit dieser Tastkugel 6 wird eine zu vermessende Oberfläche abgetastet. Der Taster 3 wird ebenfalls an einem Dreh-Schwenk-Gelenk 4 befestigt, so daß er gegenüber dem Ende der Pinole 2 verstellt werden kann. Die Gewichtskraft G des auskragenden Tasters 3 mit Tastkugel 6 und des Gelenkes 4 verursacht eine Verformung der Pinole 2, so daß Pinole 2, Dreh-Schwenk-Gelenk 4 und Taster 3 sowie Tastkugel 6 die mit Bezugszeichen 2a, 4a, 3a bzw. 6a bezeichnete Stellung einnehmen. Natürlich ist in Fig. 2 wie auch in Fig. 1 die Verformung zur besseren Verdeutlichung stark überzeichnet dargestellt. Korrekturbedarf entsteht aber auch ohne Dreh-Schwenk-Gelenk 4.

Zur Korrektur dieser Verformung wird das vom Dreh-Schwenk-Gelenk 4 und Taster 3 samt Tastkugel 6 bewirkte Torsionsmoment, das in die Pinole 2 um deren Längsachse eingeleitet wird, berücksichtigt, indem mit Steifigkeitswerten der Pinole 2 und dem Moment die Verschiebung der Tastkugel 6 berechnet und das Ergebnis dieser Berechnung in Form eines Korrekturvektors auf die gemessene Tasterkoordinate angewendet wird.

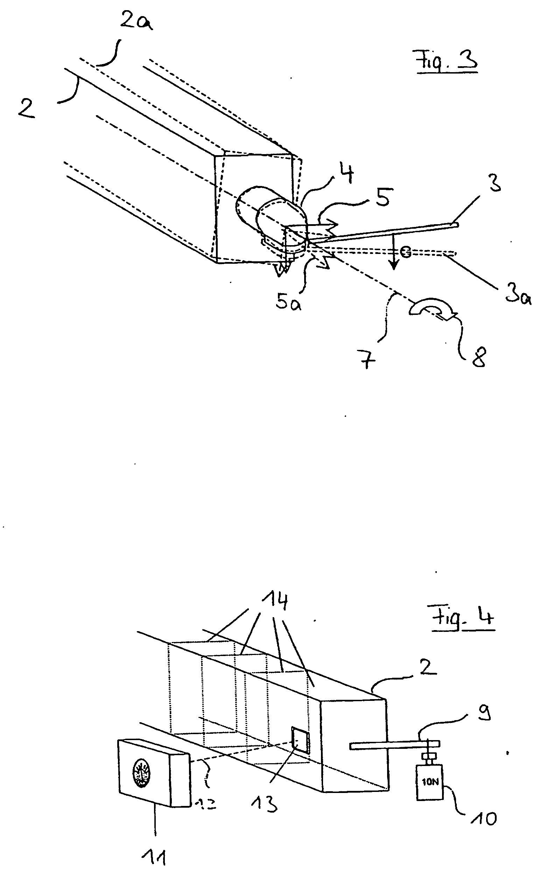

Die Korrektur der Verformung kann auch bei einer Torsion, wie sie in Fig. 3 dargestellt ist, angewendet werden. Fig. 3 zeigt eine Pinole 2, an deren Ende ein Dreh-Schwenk-Gelenk 4 mit einem Taster 3 angebracht ist. Das Dreh-Schwenk-Gelenk 4 ist so gestellt, daß der Taster 3 über eine Längsachse 7 der Pinole seitlich auskragt. Durch die Gewichtskraft G von Dreh-Schwenk-Gelenk 4 und Taster 3, deren Massenschwerpunkt außerhalb der Längsachse 7 liegt, wird die Pinole 2 in die mit Bezugszeichen 2a schematisch eingezeichnete Stellung tordiert. Die Verrechnung der Torsionssteifigkeit der Pinole 2 mit dem durch das Dreh-Schwenk-Gelenk 4 sowie den Taster 3 ausgeübte Moment ergibt eine Transformationsmatrix, die es erlaubt, die Abweichung zwischen der aktuellen Tasterkoordinate 5a und der bei Torsionsfreiheit zu erwartenden Tasterkoordinate 5 zu bereinigen. In das Moment, das Dreh-Schwenk-Gelenk 4 und Taster 3 um die Längsachse 7 der Pinole 2 ausüben, geht die aktuelle Stellung des Dreh-Schwenk-Gelenkes sowie die Konfiguration des Tasters 3 ein, letztlich also der Massenschwerpunkt und das Gewicht.

Zur Korrektur wird aus einer Tabelle ein Torsions-Steifigkeitswert der Pinole 2 ausgelesen und zusammen mit dem Moment, das eine weitere Tabelle für die aktuelle Konfiguration und Stellung von Dreh-Schwenk-Gelenk 4 und Taster 3 liefert, zu einer Transformationsmatrix verrechnet, die dann durch Multiplikation mit der Tasterkoordinate 5a die Tasterkoordinate 5 liefert.

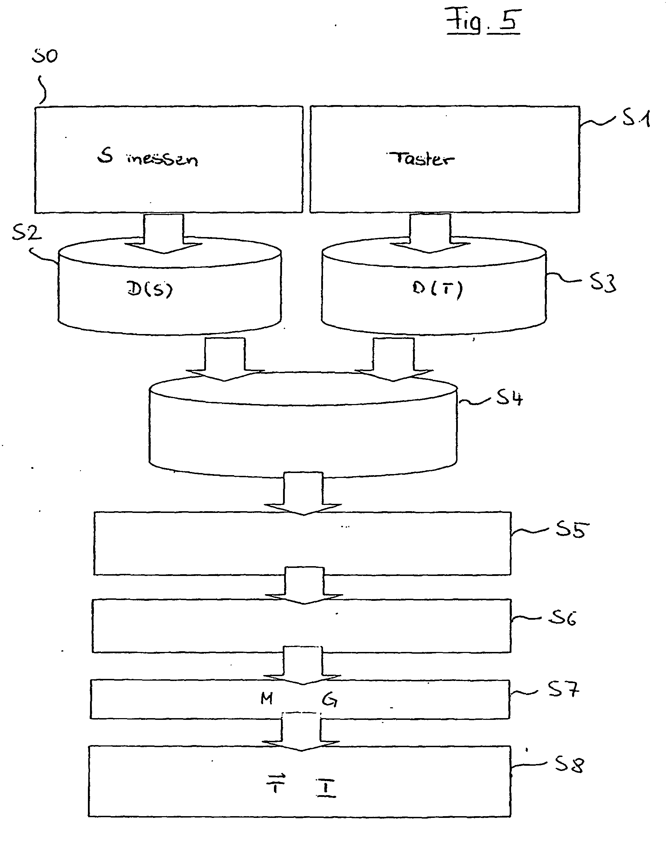

Für diese Berechnung müssen natürlich Werte über die Steifigkeit der Pinole 2 vorliegen. Die Torsionssteifigkeit kann beispielsweise mit dem in Fig. 4 dargestellten Aufbau bestimmt werden. Am Ende der Pinole 2 wird ein Hebel 9 befestigt, an dessen Ende ein Gewicht 10 hängt. Aus Größe des Gewichts und Hebelarm ergibt sich das Moment, daß um die Pinolenachse eingeleitet wird. Mittels eines Winkelmeßgerätes 10, das einen Lichtstrahl 11 auf eine an der Pinole 2 befindliche Spiegelfläche 13 richtet, wird ein Winkelfehler als Torsionswinkel der Pinole 2 in der Meßkonfiguration ermittelt. Diese Messung wird für verschiedene Stützstellen 14, d.h. für unterschiedliche Auskragungen der Pinole 2 wiederholt, so daß ein Satz von Steifigkeitsparametem für die Pinole 2 gewonnen wird. Aus den Winkelfehlern wird eine Transformationsmatrix errechnet, die dann mit der Tasterkoordinate multipliziert die gewünschte Korrektur ermöglicht. Vereinfachend kann auch mit trigonometrischen Funktionen der Fehlervektor ausgerechnet werden.

Auf ähnliche Weise wird die Auswirkung eines Biegemomentes auf die Pinole 2 bestimmt, beispielsweise indem ein Gewicht auf das Ende der Pinole 2 aufgesetzt und die Durchbiegung mit einer Meßuhr gemessen wird. Auch hierfür werden verschiedene Stützstellen 14 bzw. verschiedene Auskragungen verwendet. Alternativ kann auch die Koordinatenmeßmaschine 1 selbst zur Messung der Durchbiegung verwendet werden, indem ein bekanntes Gewicht auf das Ende der Pinole 2 gesetzt und ein Prüfkörper abgetastet wird. Der dabei festgestellte Meßfehler als Differenz zwischen bekannter und gemessener Geometrie des Prüfkörpers ist dann durch die Biegung der Pinole 2 bedingt.

Auf ähnliche Weise kann auch die Kippung des Endes der Pinole 2 bestimmt werden, indem wiederum ein Gewicht auf das Pinolenende aufgesetzt und mit dem Winkelmeßgerät 11, das dann den Lichtstrahl 12 auf die Stirnfläche der Pinole 2 richtet, der Kippungswinkel und damit der Winkelfehler wiederum für verschiedene Stützstellen bestimmt werden.

Um einen aktuellen Steifigkeitsparameter für eine momentane Auskragung der Pinole 2 zu erhalten, kann eine Interpolation zwischen den Stützstellen der aufgenommenen Steifigkeitsparameter vorgenommen werden. Dabei sind verschiedene Interpolationen tauglich, wie lineare Interpolation oder Spline- oder Polynom-Interpolation.

Das bereits beschriebene Verfahren zur Korrektur des Meßfehlers bei einer Koordinatenmeßmaschine ist in Fig. 5 als Blockschaltbild schematisch dargestellt. In einem Schritt S0 werden Steifigkeitswerte S für unterschiedliche Stellungen der Koordinatenmeßmaschine, beispielsweise für unterschiedliche Auskragungen, gemessen. Dabei wird sowohl die Biege- als auch die Torsionssteifigkeit erfaßt. Schritt S0 muß für jeden Koordinatenmeßmaschinentyp mindestens einmal durchgeführt werden. Eine wiederholte Durchführung ist verzichtbar, wenn innerhalb von gewissen Fertigungstoleranzen davon ausgegangen werden kann, daß Koordinatenmeßmaschinen eines Typs die gleichen Biege- und Torsionssteifigkeits-Eigenschaften haben.

Weiter werden in einem Schritt S1 für alle verwendeten Tastertypen Masse, Schwerpunktsabstand vom Pinolenende und längenspezifische Masse von Tasterverlängerungen ermittelt. Schritt S1 stellt sicher, daß alle notwendigen Parameter zur Bestimmung eines durch einen Taster verursachten Momentes sowie das Gewicht des Tasters bekannt sind. In diese Daten sind auch mögliche Konfigurationen mit einem Dreh-Schwenk-Gelenk eingeschlossen, wobei die Werte diesbezüglich zusätzlich nach der Stellung dieses Gelenks parametrisiert sind. Die Parametrisierung nach der Stellung des Gelenkes ist aber nicht zwingend nötig. Aus Tasterparametern einer Grundstellung oder aus Tasterparametem im letzten Gelenksystem der Pinole kann mit Hilfe eines mathematischen Modells für das Gelenk das Moment um das Piolenende in der aktuellen Winkelstellung berechnung werden.

In einem Schritt S2 wird eine Korrekturdatei D (S) erzeugt, die die erwähnte Tabelle mit Steifigkeitsparametem der Koordinatenmeßmaschine bzw. deren Pinole enthält. Analoges erfolgt in einem Schritt S3 mit den Tasterdaten.

In einem Schritt S4 werden die Korrekturdateien einem Zielsystem, d.h. einer Koordinatenmeßmaschine bzw. deren Steuersystem 15 eingespielt. Schritt S4 stellt also in einer Koordinatenmeßmaschine die Voraussetzungen her, damit das Steuergerät 15 die entsprechenden Daten zur Verfügung hat, um das erfindungsgemäße Korrekturverfahren durchzuführen.

Das Steuergerät 15 initialisiert in einem Schritt S5 die Korrekturprogramme, indem die Steifigkeitsparameter sowie die Tasterdaten in einen Speicher eines Meßrechners geladen werden.

Dann wird fortwährend in einem Schritt S6 die Steifigkeit der Pinole für den aktuellen Betriebszustand, d.h. für die aktuelle Auskragung ermittelt, wobei eine lineare Interpolation zwischen den einzelnen Stützstellen der aufgenommenen Steifigkeitsparameter, die in der Datei D (S) enthalten sind, stattfindet.

In einem Schritt S7 werden weiter aus den aktuellen Tasterdaten sowie der Tasterstellung das Torsionsmoment M um die Achse der Pinole 2 und das Differenzgewicht G des aktuellen Tasters vom Referenztaster ermittelt. Aus Moment M und Gewicht G werden dann in Schritt S7 ein Translationsvektor $\bar{T}$ sowie eine Transformationsmatrix $\underline{T}$ errechnet. Der Vektor wird zur Tasterkoordinate addiert. Die Matrix, die die Verkippung des Pinolenendes sowie die Torsion der Pinole 2 beschreibt, wird mit der Tasterkoordinate 5 multipliziert, so daß am Ende des Schrittes S8 eine Korrektur für die aktuelle Meßposition vorliegt. Die Schritte S6 bis S8 werden dann im Laufe der Messung wiederholt.

**Patentansprüche**

1.  Korrekturverfahren für die Messung mit einer Koordinatenmeßmaschine (1), die mit einem Taster (3) eine Oberfläche abfühlt, wobei der Taster (3) an einem Ende einer Pinole (2) angebracht ist, Meßwerte über die Position des Tasters (3) aufgenommen werden, die Meßwerte mittels in Tabellen vorab bereitgestellten Korrekturwerten korrigiert werden, die beim aktuellen Betriebszustand vorliegende Steifigkeit der Pinole (2) mittels hinterlegten, betriebszustandsabhängigen Daten ermittelt, mittels dieser Steifigkeit ein Fehlerwert für eine aktuelle Durchbiegung oder Verkippung der Pinole (2) bestimmt wird und mit diesem Fehlerwert die Meßwerte korrigiert werden, **dadurch gekennzeichnet, daß**, wenn der Taster (3) am Ende der Pinole (2) über ein Dreh-Schwenk-Gelenk (4) schwenkbar angebracht ist, die Stellung des Dreh-Schwenk-Gelenks (4) ermittelt, mittels einer weiteren Tabelle ein bei der aktuellen Stellung des Dreh-Schwenk-Gelenkes und der aktuellen Tasterkonfiguration auf die Pinole (2) ausgeübtes Moment (8) bestimmt und bei der Bestimmung des Fehlerwertes berücksichtigt wird.

2.  Korrekturverfahren nach Anspruch 1, **dadurch gekennzeichnet, daß** das Gewicht des Tasters (3) bei der Bestimmung des Fehlerwertes berücksichtigt wird.

3.  Korrekturverfahren nach Anspruch 1, **dadurch gekennzeichnet, daß** ein Moment (8) um die Pinolenachse (7) ermittelt wird.

4.  Korrekturverfahren nach einem der obigen Ansprüche, **dadurch gekennzeichnet, daß** bei der Ermittlung der Steifigkeit auf eine Tabelle mit Steifigkeitsparametem zugegriffen wird.

5.  Korrekturverfahren nach Anspruch 4, **dadurch gekennzeichnet, daß** die Tabelle aus Messungen der Biege- und Torsionssteifigkeit der Pinole (2) stammt.

6.  Koordinatenmeßmaschine mit einem Taster (3) zum Abfühlen einer Oberfläche, der am einen Ende einer Pinole (2) angebracht ist, und einer Steuervorrichtung (15), die die Position des Tasters (3) bestimmt und daraus Meßwerte erzeugt, wobei die Steuervorrichtung (15) die Meßwerte mittels in Tabellen vorab bereitgestellten Korrekturwerten korrigiert und dazu die beim aktuellen Betriebszustand vorliegende Steifigkeit der Pinole (2) mittels hinterlegten, betriebszustandsabhängigen Daten ermittelt, damit einen Fehlerwert für eine aktuelle Durchbiegung oder Verkippung der Pinole (2) bestimmt und mit diesem Fehlerwert die Meßwerte korrigiert, **dadurch gekennzeichnet, daß**, wenn der Taster (3) über ein Dreh-Schwenk-Gelenk (4) schwenkbar am Ende der Pinole (2) angebracht ist, die Steuervorrichtung (15) die Stellung des Dreh-Schwenk-Gelenkes (4) ermittelt, mittels einer weiteren Tabelle ein bei der aktuellen Stellung des Dreh-Schwenk-Gelenkes und der aktuellen Tasterkonfiguration auf die Pinole (2) ausgeübtes Moment (8) bestimmt und bei der Bestimmung des Fehlerwertes berücksichtigt.

7. Koordinatenmeßmaschine nach Anspruch 6, **dadurch gekennzeichnet, daß** die Steuervorrichtung (15) das Gewicht des Tasters (3) bei der Bestimmung des Fehlerwertes berücksichtigt.

8. Koordinatenmeßmaschine nach einem der Ansprüche 6 oder 7, **dadurch gekennzeichnet, daß** die Steuervorrichtung (15) auf eine Speichereinheit Zugriff hat, in der Steifigkeitsparameter der Pinole (2) und Parameter des Tasters (3) abgelegt sind.

**Claims**

1. A method of correction for measurements made by a coordinate measuring machine (1), which uses a probe (3) to sense a surface, wherein said probe (3) is attached to one end of a probe arm (2), measured values concerning the position of the probe (3) are recorded, said measured values are corrected by means of correcting values provided in advance in tables, the rigidity of the probe arm (2) in the actual operating condition is determined by means of stored data which relate to the operating condition, an error value for the actual bending or tilting of the probe arm (2) is determined using said rigidity, and the measured values are corrected by means of this error value, **characterised in that**, if the probe (3) is pivotally attached to the end of the probe arm (2) via a rotary swivel joint (4), the position of said rotary swivel joint (4) is determined, a moment (8) exerted upon the probe arm (2) at the actual position of the rotary swivel joint and with the present probe configuration is determined by means of a further table and is taken into consideration when determining the error value.

2. Method of correction according to claim 1, **characterised in that** the weight of the probe (3) is taken into consideration when determining the error value.

3. Method of correction according to claim 1, **characterised in that** a moment (8) around the axis (7) of the probe arm is determined.

4. Method of correction according to any one of the above claims, **characterised in that** a table including parameters of rigidity is accessed when determining rigidity.

5. Method of correction according to claim 4, **characterised in that** said table is obtained by measurements of the resistance to bending and torsion of the probe arm (2).

6. A coordinate measuring machine comprising a probe (3) for sensing a surface, said probe (3) being attached to one end of a probe arm (2), and a control device (15), which determines the position of said probe (3) and generates measured values therefrom, wherein said control device (15) corrects the measured values by means of correcting values provided in advance in tables and, for this purpose, determines the rigidity of the probe arm (2) in the actual operating condition, by means of data relating to the operating condition, thus determining an error value for the actual bending or tilting of the probe arm (2) and using this error value to correct the measured values, **characterised in that**, if the probe (3) is attached to the end of the probe arm (2) by means of a rotary swivel joint (4), the control device (15) determines the position of the rotary swivel joint (4), uses a further table to determine a moment (8) exerted upon the probe arm (2) at the actual position of the rotary swivel joint and with the present probe configuration and takes said moment (8) into consideration when determining the error value.

7. Coordinate measuring machine according to claim 6, **characterised in that** the control device (15) takes the weight of the probe (3) into consideration when determining the error value.

8. Coordinate measuring machine according to any one of claims 6 or 7, **characterised in that** the control device (15) has access to a memory unit in which parameters for the rigidity of the probe arm (2) and parameters of the probe (3) are stored.

**Revendications**

1. Procédé de correction pour la mesure avec une machine de mesure de coordonnées (1) qui palpe une surface avec un palpeur (3), dans lequel le palpeur (3) est monté à une extrémité d'un fourreau (2), des valeurs de mesure sur la position du palpeur (3) sont enregistrées, les valeurs de mesure sont corrigées à l'aide de valeurs de correction préalablement fournies dans des tableaux, la rigidité du fourreau (2) présente à l'état de fonctionnement actuel est déterminée à l'aide de données déposées, dépendantes de l'état de fonctionnement, une valeur d'erreur pour un fléchissement ou un renversement actuel du fourreau (2) est déterminée à l'aide de cette rigidité et les valeurs de mesure sont corrigées avec cette valeur d'erreur, **caractérisé en ce que**, lorsque le palpeur (3) est monté de manière basculante à l'extrémité du fourreau (2) au moyen d'une articulation tournante-basculante (4), la position de l'articulation tournante-basculante (4) est détectée, un moment (8) exercé sur le fourreau (2) dans la position actuelle de l'articulation tournante-basculante et la configuration actuelle du palpeur est déterminé à l'aide d'un autre tableau et pris en compte pour la détermination de la valeur d'erreur.

2. Procédé de correction selon la revendication 1, **caractérisé en ce que** le poids du palpeur (3) est pris en compte lors la détermination de la valeur d'erreur.

3. Procédé de correction selon la revendication 1, **caractérisé en ce qu'**un moment (8) est déterminé autour de l'axe du fourreau (7).

4. Procédé de correction selon l'une quelconque des revendications précédentes, **caractérisé en ce que**, lors de la détermination de la rigidité, on a recours à un tableau avec des paramètres de rigidité.

5. Procédé de correction selon la revendication 4, **caractérisé en ce que** le tableau provient des mesures de rigidité à la flexion et à la torsion du fourreau (2).

6. Machine de mesure de coordonnées avec un palpeur (3) pour palper une surface qui est monté à une extrémité d'un fourreau (2) et un dispositif de commande (15) qui détermine la position du palpeur (3) et qui génère des valeurs de mesure à partir de celle-ci, dans laquelle le dispositif de commande (15) corrige les valeurs de mesure à l'aide de valeurs de correction préalablement fournies dans des tableaux et détermine pour cela la rigidité du fourreau (2) présente à l'état de fonctionnement actuel à l'aide de données déposées, dépendantes de l'état de fonctionnement, détermine ainsi une valeur d'erreur pour un fléchissement ou un renversement actuel du fourreau (2) et corrige les valeurs de mesure avec cette valeur d'erreur, **caractérisée en ce que**, lorsque le palpeur (3) est monté de manière basculante à l'extrémité du fourreau (2) au moyen d'une articulation tournante-basculante (4), le dispositif de commande (15) détermine la position de l'articulation tournante-basculante (4), détermine un moment (8) exercé sur le fourreau (2) dans la position actuelle de l'articulation tournante-basculante et la configuration actuelle du palpeur à l'aide d'un autre tableau et le prend en compte pour la détermination de la valeur d'erreur.

7. Machine de mesure de coordonnées selon la revendication 6, **caractérisée en ce que** le dispositif de commande (15) prend en compte le poids du palpeur (3) lors la détermination de la valeur d'erreur.

8. Machine de mesure de coordonnées selon l'une quelconque des revendications 6 ou 7, **caractérisée en ce que** le dispositif de commande (15) a accès à une unité de mémoire dans laquelle sont déposés les paramètres de rigidité du fourreau (2) et les paramètres du palpeur (3).

Fig. 1

Fig. 2

Fig. 3

2a

2

4

5

3

5a

3a

7

8

Fig. 4

14

2

9

10N

10

13

13

11

Fig. 5